Europäisches Patentamt

European Patent Office

Office européen des brevets

(19)

(11) **EP 0 769 760 B1**

(12) **FASCICULE DE BREVET EUROPEEN**

(45) Date de publication et mention de la délivrance du brevet:
**27.05.1998 Bulletin 1998/22**

(51) Int Cl.⁶: **G06T 7/00**, G06T 5/00

(21) Numéro de dépôt: **96402203.2**

(22) Date de dépôt: **16.10.1996**

(54) **Procédé de détection automatique des zones expertisables dans des images de pièces mécaniques**

Verfahren zur automatischen Erkennung von auswertbaren Zonen in Bildern von mechanischen Teilen

Method of automatically detecting evaluation zones in images of mechanical parts

(84) Etats contractants désignés:
**CH DE ES FR GB IT LI SE**

(30) Priorité: **18.10.1995 FR 9512203**

(43) Date de publication de la demande:
**23.04.1997 Bulletin 1997/17**

(73) Titulaire: **SOCIETE NATIONALE D'ETUDE ET DE CONSTRUCTION DE MOTEURS D'AVIATION, "S.N.E.C.M.A."**
**75015 Paris (FR)**

(72) Inventeurs:
- **Jochems, Tilman**
  **66000 Perpignan (FR)**
- **Prejean-Lefevre, Véronique Hélène Marie Pierre**
  **92330 Sceaux (FR)**

(56) Documents cités:
**EP-A- 0 627 693**

- **REAL-TIME IMAGING, vol. 1, no. 2, 1 Juin 1995, pages 139-158, XP000531487 THOMAS A D H ET AL: "REAL-TIME INDUSTRIAL VISUAL INSPECTION: A REVIEW"**
- **MACHINE DESIGN, vol. 58, no. 2, Janvier 1986, CLEVELAND US, pages 67-71, XP002008025 SYLVAN: "Multiprocessing for industrial control"**
- **DECISION AIDING FOR COMPLEX SYSTEMS, CHARLOTTESVILLE, OCT. 13 - 16, 1991, vol. 1, 13 Octobre 1991, IEEE, pages 13-17, XP000238420 TEOH E K: "AN INTELLIGENT ROBOTIC VISION SYSTEM FOR INSPECTION OF SURFACE MOUNT PCBS"**

## Description

L'invention concerne un procédé de détection automatique des zones expertisables dans des images de pièces mécaniques. Elle s'applique en particulier au contrôle de pièces mécaniques par radioscopie.

Le contrôle par radioscopie d'une pièce est généralement réalisé au moyen de plusieurs vues permettant d'inspecter différentes zones de la pièce. Les images obtenues pour les différentes vues présentent souvent plusieurs zones. Certaines zones sont dites non expertisables quand elles sont saturées dans des niveaux de gris très clairs ou très sombres, ou quand le contraste n'y est pas suffisant pour permettre la détection de défauts, ou quand elles ne représentent pas la pièce ; les autres zones sont dites expertisables et sont utilisées pour rechercher des défauts éventuels.

Les méthodes connues, par exemple du document EP-A- 0 627 693, de détermination des zones expertisables dans une image de pièce mécanique consistent généralement à effectuer un marquage des différentes zones de l'image puis à déterminer le contour exact des zones en utilisant une méthode connue sous le nom de ligne de partage des eaux, LPE en abrégé. Le problème de ces méthodes est qu'elles ne sont pas entièrement automatiques et nécessitent un opérateur pour effectuer le marquage des zones de l'image. La détermination des marqueurs est une opération délicate et doit être mise en oeuvre par un opérateur qualifié en analyse d'images. Les méthodes manuelles sont particulièrement longues et fastidieuses dans les cas fréquents où elles sont appliquées à un contrôle de pièces mécaniques en série et où le même traitement doit être appliqué à une série d'images montrant la même scène avec des objets qui peuvent être localisés à des endroits différents et/ou avoir des formes variables. Par ailleurs, l'absence de méthode systématique pour effectuer le marquage des zones peut conduire à des interprétations erronées des images et remettre en cause la fiabilité du contrôle des pièces.

Un premier but de l'invention est de réaliser une méthode permettant de détecter de façon automatique les différentes zones dans une image de pièce mécanique. Un autre but de l'invention est de réaliser une méthode permettant de déterminer automatiquement un ensemble de marqueurs associés à différentes zones de l'image, ces marqueurs ayant des dimensions optimisées.

Pour cela, l'invention consiste dans une première phase dite phase de segmentation manuelle à établir une description des images à segmenter en utilisant une ou plusieurs images de référence représentatives des images à segmenter. Pendant cette première phase la détection des zones dans les images de référence est effectuée par un opérateur au moyen d'une segmentation manuelle.

Dans une deuxième phase, appelée phase de détermination et d'optimisation des paramètres de marquage, l'invention consiste à définir des transformations de simplification des images de référence permettant d'accentuer un contraste ou une différence entre deux ou plusieurs zones et à déterminer et fixer des intervalles de seuillage des images permettant d'obtenir des marqueurs des zones détectées dans la première phase. Chaque marqueur est un sous-ensemble d'une seule zone de l'image et a des dimensions optimisées de manière à accélérer le procédé de segmentation des images et à le rendre plus stable contre le bruit.

Enfin, dans une troisième phase, l'invention consiste à marquer automatiquement les zones de nouvelles images en appliquant à ces images les transformations de simplification définies dans la deuxième phase et en utilisant les paramètres fixés pendant la deuxième phase. Le contour exact des zones est ensuite déterminé en utilisant la méthode connue sous le nom de ligne de partage des eaux.

Selon l'invention le procédé de détection automatique des zones expertisables dans une image de pièce mécanique consistant à effectuer un marquage des zones de l'image et à déterminer le contour exact des zones en utilisant une méthode appelée ligne de partage des eaux, est caractérisé en ce que pour effectuer le marquage des zones, il consiste :

- dans une première phase (1), à effectuer une segmentation manuelle d'au moins une image de référence pour détecter les zones de cette image de référence ;

- dans une deuxième phase (2), à définir et à appliquer au moins une transformation de simplification à l'image de référence, cette transformation pouvant être la transformation identité, à déterminer et optimiser des intervalles de seuillage des zones de l'image de référence permettant d'obtenir des marqueurs caractéristiques de chaque zone, à fixer les intervalles de seuillage optimisés ;

- dans une troisième phase (3), à effectuer le marquage automatique des zones d'une nouvelle image en appliquant successivement à la nouvelle image la transformation de simplification et les intervalles de seuillages fixés pendant la deuxième phase.

D'autres particularités et avantages de l'invention apparaitront clairement dans la suite de la description donnée à titre d'exemple non limitatif et faite en regard des figures annexées qui représentent :

- la figure 1a, une image d'une pièce mécanique comportant trois zones ;

- la figure 1b, un exemple d'un ensemble de marqueurs choisis pour détecter les différentes zones dans l'image de la figure 1a ;

- la figure 1c, une image transformée de la pièce mécanique après application d'une transformation gradient ;

- la figure 1d, le résultat de la segmentation de l'image de la figure 1a en trois zones, obtenu après application de la méthode LPE, selon l'invention ;

- la figure 2, un schéma synoptique des différentes phases du procédé de détection des zones dans une image de pièce mécanique, selon l'invention ;

- la figure 3a, un schéma synoptique des étapes du procédé de marquage pendant une première phase dite phase de segmentation manuelle, selon l'invention ;

- la figure 3b, un schéma synoptique des étapes du procédé de marquage pendant une deuxième phase, dite phase de détermination et d'optimisation des paramètres de marquage, selon l'invention ;

- la figure 4a, une image comportant 2 zones A et B ;

- la figure 4b, les histogrammes hA et hB des deux zones A et B de l'image de la figure 3a ;

- la figure 4c, une image de deux marqueurs obtenus après seuillage de l'image représentée sur la figure 3a, selon l'invention ;

- la figure 5, un schéma synoptique des étapes de détermination et d'optimisation des bornes de seuillage d'une image comportant deux zones A et B, selon l'invention.

La segmentation d'une image consiste à partager une image en plusieurs zones et permet de reconnaitre des objets ou des régions d'apparence homogène.

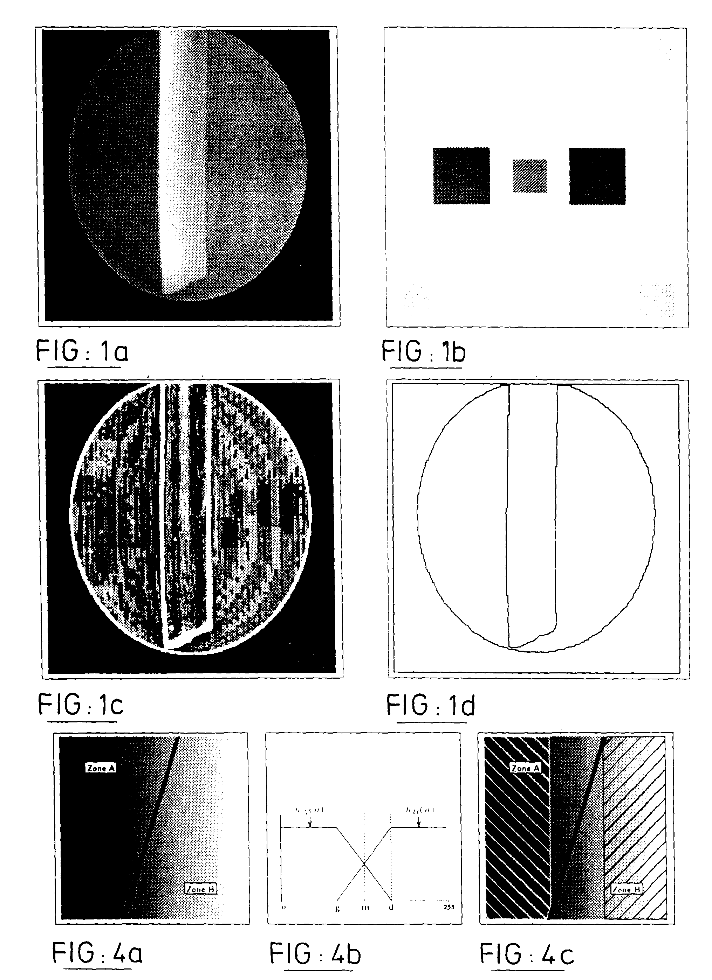

La figure 1a montre une image radioscopique d'une aube pleine. Cette image comporte trois zones, la zone au milieu de l'image étant l'aube, la zone autour de l'aube étant dûe au champ circulaire d'un amplificateur de brillance, la zone externe en noir correspondant au masque de la caméra de prise de vues. Pour segmenter cette image et reconnaitre ces trois zones en utilisant une méthode LPE, il est nécessaire de définir un ensemble de marqueurs caractéristiques des zones de l'image et une image transformée de l'image originale dans laquelle les contours des différentes zones sont mis en évidence.

La figure 1b montre un exemple de choix d'un ensemble de marqueurs, dont chacun est caractéristique d'une seule zone de l'image. Les trois zones sont marquées par des carrés en niveaux de gris différents.

La figure 1c présente une image dans laquelle les contours des différentes zones apparaissent très nettement en blanc. Cette image a été obtenue en appliquant une transformation appelée "gradient morphologique" sur l'image originale. Cette transformation gradient morphologique consiste à effectuer successivement sur l'image originale, une dilatation morphologique , une érosion morphologique et une soustraction entre les images dilatées et érodées.

L'ensemble des marqueurs et l'image transformée étant définis, la segmentation de l'image originale peut alors être effectuée en utilisant la méthode LPE.

La méthode LPE consiste à étendre les marqueurs en suivant le relief de l'image transformée (en considérant l'image comme une surface topographique) et à déterminer les contours exacts des zones dans l'image.

La figure 1d montre le résultat de la segmentation de l'image originale représentée sur la figure 1a après application de la méthode LPE en utilisant les marqueurs et l'image transformée représentés respectivement sur les figures 1b et 1c.

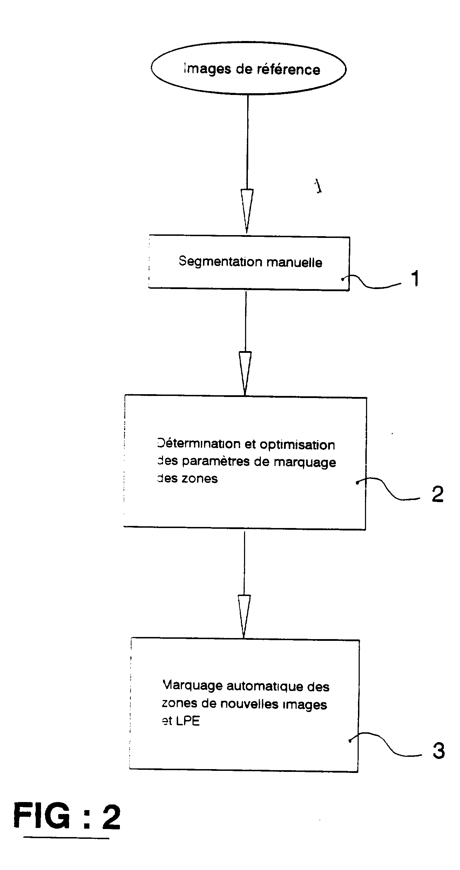

La figure 2 représente un schéma synoptique des trois phases du procédé de détection des zones dans des images de pièce mécanique, selon l'invention.

Les deux premières phases 1 et 2 sont des phases d'apprentissage. Dans la phase 1, une segmentation manuelle d'une ou plusieurs images de référence est effectuée afin d'obtenir une description des différentes zones de ces images de référence. Dans la phase 2, sont déterminés, optimisés et fixés des paramètres de marquage des zones des images de référence, ces paramètres de marquage étant les transformations de simplification les plus efficaces et des intervalles de seuillage des images permettant d'obtenir une qualité optimale de séparation des zones des images de référence. Ces phases nécessitent la présence d'un opérateur notamment pour effectuer une segmentation des images de référence et pour définir les transformations de simplification. La recherche des intervalles de seuillage optimum s'effectue de façon automatique.

La troisième phase 3, est une phase entièrement automatique consistant à utiliser les paramètres de marquage des zones définis et fixés pendant la deuxième phase pour marquer les zones de nouvelles images. Cette troisième phase permet de contrôler automatiquement des pièces mécaniques en série sans nécessiter la présence d'un opérateur pour effectuer le marquage des zones des images. Le contour exact des zones est obtenu en utilisant ensuite la méthode connue sous le nom de ligne de partage des eaux LPE.

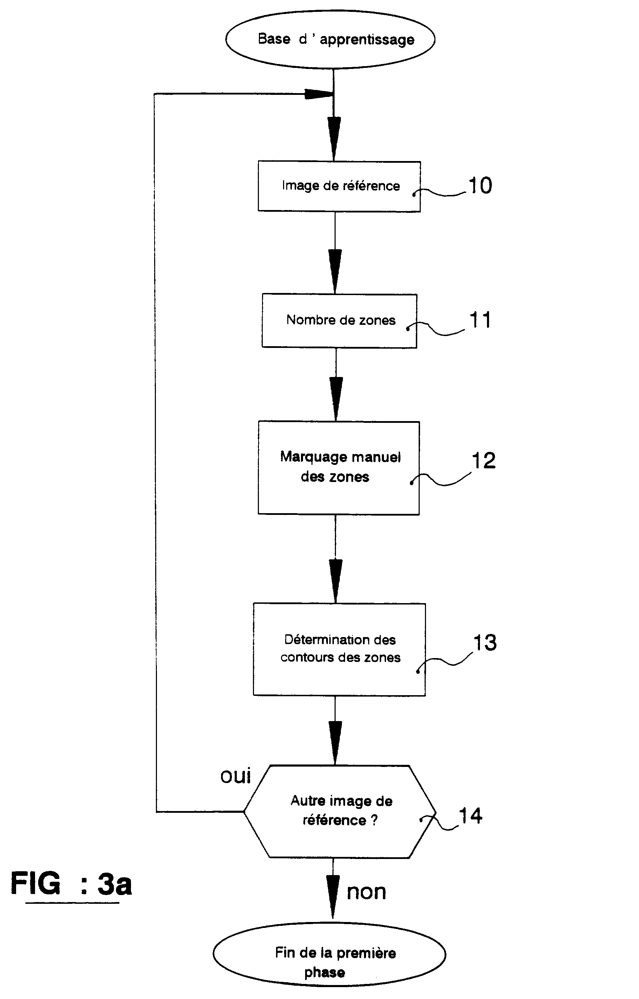

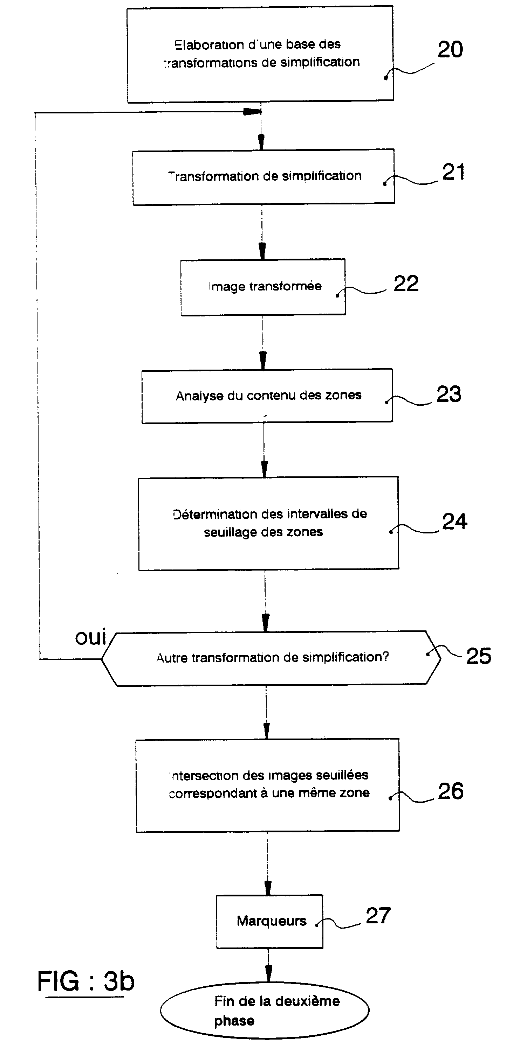

Les figures 3a et 3b représentent deux schémas synoptiques correspondant respectivement aux deux premières phases du procédé de marquage, selon l'invention. La figure 3a est relative à une première phase, dite phase de segmentation manuelle pendant laquelle des images de référence stockées dans une base d'apprentissage sont segmentées en différentes zones par une méthode de segmentation manuelle. Cette première phase comporte une première étape 10 qui consiste à choisir une image de référence dans la base d'apprentissage, une étape 11 pendant laquelle un opérateur indique le nombre de zones dans l'image choisie, une étape 12 pendant laquelle l'opérateur marque manuellement les zones sur l'image au moyen d'un pointeur, une étape 13 pendant laquelle les contours exacts des zones sont déterminés en utilisant la méthode de ligne de partage des eaux LPE. La segmentation manuelle de l'image de référence est alors terminée et un test est effectué dans une étape 14 pour déterminer si toutes les images disponibles dans la base d'apprentissage ont été segmentées. Si le test est négatif, une autre image de référence est extraite de la base d'apprentissage et les étapes 10 à 14 sont répétées avec cette nouvelle image de référence. Si le test est positif la première phase est terminée.

La figure 3b est relative à la deuxième phase du procédé de marquage des zones dans une image, appelée phase de détermination et d'optimisation des paramètres de marquage, pendant laquelle les zones des images de référence déterminées pendant la première phase sont analysées de manière à extraire des marqueurs ayant des dimensions optimisées et une intersection nulle entre eux.

Comme la position des zones dans les images de référence est connue par la segmentation manuelle effectuée pendant la première phase, il est possible d'effectuer des mesures et des statistiques dans chacune de ces zones. En particulier, il est possible de calculer des histogrammes qui informent sur la répartition des niveaux de gris dans chaque zone, ou de calculer des granulométries qui permettent de connaitre la forme de chaque zone.

L'invention consiste à utiliser ces mesures et ces statistiques pour déterminer et optimiser des marqueurs. Pour cela, dans une étape 20, les images segmentées pendant la première phase sont utilisées pour élaborer une base de transformations de simplification de ces images.

Les transformations de simplification de l'image sont choisies par l'opérateur de manière à accentuer un contraste ou une différence entre deux ou plusieurs zones de l'image.

La différence entre deux ou plusieurs zones peut être par exemple une différence de forme, de position, de texture etc... qui se traduit dans l'image transformée par une différence de niveaux de gris et qui permet le marquage des zones concernées en effectuant des seuillages.

Il existe de nombreuses opérations de transformations des images tel que par exemple, la transformation identité, une érosion, une dilatation, un laplacien , un chapeau haut-de-forme, une correction de contraste, un filtre passe-haut, un filtre passe-bas, etc... Ces opérations de transformation peuvent également être combinées entre-elles. Parmi toutes les opérations possibles, l'opérateur choisit celles qui mettent avantageusement en évidence certaines caractéristiques de l'image et qui permettent ainsi de faire ressortir l'information recherchée.

En général il est nécessaire de choisir plusieurs transformations de simplification de l'image, car lorsqu'une transformation permet d'augmenter des différences ou un contraste dans l'image, elle introduit également du bruit et des parasites.

Le bruit apparaissant de façon aléatoire d'une transformation à l'autre, il est alors possible de l'éliminer en ne retenant que l'information qui apparait systématiquement dans toutes les images transformées.

Dans le cas où une seule transformation permet de distinguer toutes les zones de l'image, l'opérateur peut limiter la base des transformations de simplification à cette unique transformation.

Lorsque la base des transformations de simplification est élaborée, les opérations manuelles du procédé sont terminées, la détermination et l'optimisation des marqueurs étant effectuées de façon entièrement automatique en suivant les étapes décrites ci-après.

Dans une étape 21, une transformation de simplification est extraite de la base des transformations et appliquée dans une étape 22, à l'une des images de référence.

Dans une étape 23, le contenu des zones de l'image transformée est analysé par exemple en calculant les histogrammes de ces zones, et les intersections entre deux zones sont recherchées.

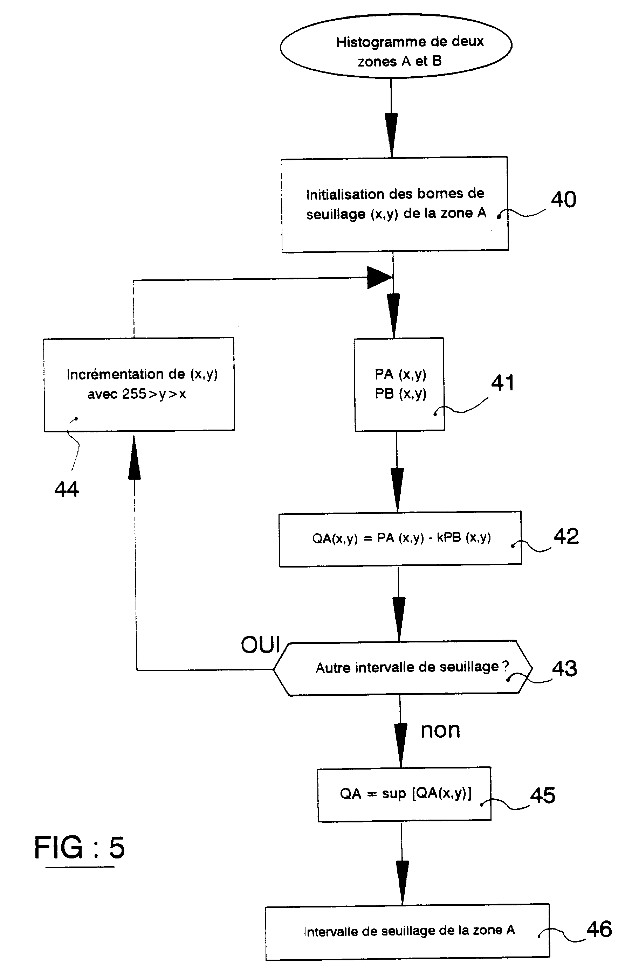

Dans une étape 24, les résultats des analyses du contenu des zones sont utilisés pour déterminer pour chaque zone un intervalle de seuillage défini par deux bornes de seuillage respectivement minimale et maximale permettant de séparer les zones. Les bornes de seuillage sont définies de manière à optimiser la qualité de la séparation entre les zones. Les étapes détaillées relatives à la détermination et l'optimisation des bornes de seuillage sont décrites en relation avec la figure 4. Dans une étape 25, un test est effectué pour déterminer si toutes les transformations de simplification ont été appliquées à l'image de référence choisie. Si le test est négatif, les étapes 21 à 24 sont de nouveau mises en oeuvre avec une autre transformation de simplification. Si le test est positif, dans une étape 26, pour chaque zone, l'intersection des images seuillées obtenues pour chaque transformation de simplification est calculée, et dans une étape 27 les résultats des intersections relatifs aux différentes zones définissent les marqueurs optimum de ces zones pour l'image de référence choisie. L'ensemble des opérations de marquage définies dans les étapes 20 à 27 est effectué pour chacune des images de référence appartenant à la base d'apprentissage et les marqueurs définitifs retenus sont obtenus en calculant pour chaque marqueur l'intersection des intervalles de seuillage correspondants déterminés pour chacune des images de référence.

Les figures 4a, 4b, 4c illustrent un exemple de détermination des bornes des intervalles de seuillage de deux zones, selon l'invention.

La figure 4a représente une image comportant deux zones A et B ; la figure 4b représente les histogrammes hA et hB des zones A et B ; la figure 4c représente une image des deux marqueurs obtenus après seuillage de l'image représentée sur la figure 4a.

Les deux histogrammes correspondant aux deux zones A et B de l'image montrent qu'il existe une intersection non nulle entre les deux zones. La partie commune des deux histogrammes est située entre des niveaux de gris notés g et d, g et d étant compris entre 0 et 255 et tels que d est supérieur à g.

Dans cette partie commune, il existe des points image appelés pixels, de la zone A qui sont plus clairs que certains points de la zone B alors que globalement la zone A est plus sombre que la zone B.

Ces deux histogrammes montrent également que les points image qui comportent des niveaux de gris compris entre 0 et g appartiennent uniquement à la zone A et que les points image qui comportent des niveaux de gris compris entre d et 255 appartiennent uniquement à la zone B. Dans cet exemple, les intervalles de seuillage permettant de définir des marqueurs qui soient caractéristiques d'une seule zone et qui soient les plus grands possibles sont donc les intervalles [O,g] pour la zone A et [d, 255] pour la zone B.

Pour définir les marqueurs de chaque zone, l'invention consiste à rechercher les bornes de seuillage g et d qui permettent de prendre en compte un nombre maximal de niveaux de gris dans chaque zone et qui permettent d'obtenir une intersection nulle entre les niveaux de gris des deux zones.

La figure 5 représente un schéma synoptique des différentes étapes de détermination et d'optimisation des bornes de seuillage d'une image comportant deux zones A et B. Sur cette figure, seules les étapes concernant le marquage de la zone A sont représentées, le procédé étant identique pour le marquage de la zone B.

La recherche des bornes de seuillage est effectuée par approches successives à partir des histogrammes des deux zones A et B et après une étape 40 d'initialisation, en calculant, dans une étape 41, pour chaque pixel de la zone A et de la zone B, la probabilité pour que ce pixel ait un niveau de gris compris entre deux bornes de seuillage x et y, y étant supérieur à x. x représentant la zone A ou la zone B, cette probabilité PX (x, y) est égale à la somme des histogrammes des pixels n appartenant à la zone X et ayant un niveau de gris compris entre les bornes de seuillage x et y, rapportée à la somme des histogrammes de tous les pixels n quelque soit leur niveau de gris compris entre 0 et 255.

$$PX\ (x,y)\ =\ \left[\sum_{n=x}^{n=y} hX(n)\right]\Big/\left[\sum_{n=0}^{n=255} hX(n)\right]$$

Pour obtenir un grand marqueur caractéristique uniquement de la zone A, l'invention consiste à rechercher les valeurs des bornes de seuillage x, y pour lesquelles la probabilité PA (x,y) est maximum et PB (x,y) est minimum.

Les valeurs de x, y sont déterminées par approches successives en considérant dans une étape 42, l'écart QA (x,y) entre les deux probabilités PA (x, y) et PB (x,y), cet écart étant une mesure de la qualité de la séparation des zones A et B correspondant à l'intervalle de seuillage [x,y] considéré.

Dans une étape 43, un test est effectué pour déterminer si il existe des intervalles de seuillage qui n'ont pas été considérés. Si le test est positif les valeurs de (x,y) sont incrémentées dans une étape 44, et les étapes 41 à 43 sont de nouveau mises en oeuvre. Si le test est négatif dans une étape 45, la valeur maximale QA de l'écart QA(x,y) entre les deux probabilités est recherchée.

Dans une étape 46, les valeurs optimales des bornes de seuillage de la zone A sont définies. Ces valeurs optimales sont celles qui permettent d'obtenir la valeur maximale QA de la qualité du marquage de la zone A.

L'expression de la valeur maximale QA est la suivante :

$$QA = \sup\ [PA\ (x,y) - k\ PB\ (x,y)]$$

k étant un coefficient de pondération qui permet d'augmenter l'importance de la probabilité de la zone B par rapport à la zone A et d'augmenter la sécurité de la séparation des zones A et B.

Dans l'exemple représenté sur les figures 4a, 4b, 4c, x et y sont égaux respectivement à 0 et g pour la zone A et à d et 255 pour la zone B.

La valeur de g qui permet d'obtenir un grand marqueur caractéristique uniquement de la zone A est déterminée par approches successives en considérant l'écart entre les deux probabilités PA (0,g) et PB (O,g) associé à la qualité du marqueur ZA de la zone A correspondant à l'intervalle de seuillage [0,g] considéré, et en recherchant le maximum QA de cet écart en fonction de la valeur de g.

L'expression de la valeur maximale QA de la qualité du marqueur ZA est la suivante :

$$QA = sup [PA (0,g) - k PB (0,g)]$$

Dans l'exemple des figures 4a, 4b, 4c, la valeur de k a été choisie égale à 50.

De la même manière, la valeur de la borne d, d étant supérieure à g, est obtenue en recherchant le maximum, en fonction de d, de la qualité QB du marqueur ZB associé à la zone B, l'expression de QB étant la suivante :

$$QB = sup [PB (d,255) - k PA (d,255)]$$

L'exemple décrit en référence aux figures 4a, 4b, 4c et à la figure 5 concerne le marquage de deux zones. Le procédé de marquage selon l'invention se généralise à un nombre de zones supérieur à deux en traitant de façon similaire les zones deux par deux.

Des marqueurs sont définis pour toutes les combinaisons possibles de couples de zones en déterminant, pour chaque couple de zones, les bornes de seuillage des zones par optimisation d'un paramètre de qualité des marqueurs de ces zones.

En général, pour une image donnée, les bornes de seuillage des différentes zones sont déterminées sur des images transformées différentes obtenues après utilisation de plusieurs transformations de simplification de l'image considérée. Le marqueur définitif Zi d'une zone i est alors déterminé par intersection de toutes les images seuillées correspondant à la zone i.

Dans le cas où une même transformation permet de distinguer plusieurs zones de l'image, plusieurs seuillages peuvent être effectués dans l'image transformée obtenue, chaque seuillage concernant un couple de zones déterminé. Dans ce cas, pour cette image transformée considérée, les bornes de seuillage d'une zone i donnée sont obtenues en considérant tous les intervalles de seuillage dans lesquels la zone i intervient et en calculant le maximum et le minimum des bornes de seuillage correspondantes.

Lorsque tous les marqueurs des différentes zones des images de référence appartenant à la base d'apprentissage ont été définis et optimisés, les valeurs des bornes de seuillage sont figées et les transformations de simplification les plus efficaces, pour lesquelles le paramètre de qualité des marqueurs est le plus important, sont sélectionnées. Les phases d'apprentissage sont alors terminées et la troisième phase du procédé consiste alors à utiliser les transformations de simplification sélectionnées et les valeurs des bornes de seuillage fixées pendant la deuxième phase pour marquer de façon complètement automatique des zones dans des nouvelles images de pièces mécaniques n'appartenant pas à la base d'apprentissage. Le marquage automatique des zones dans une nouvelle image est effectué en appliquant successivement à la nouvelle image les différentes transformations de simplification sélectionnées et les différents seuillages dont les bornes ont été fixées pendant la deuxième phase. Les marqueurs de chaque zone sont ensuite obtenus en effectuant l'intersection des images seuillées correspondant à une même zone.

Après l'opération de marquage, les nouvelles images sont segmentées au moyen de la méthode de ligne de partage des eaux LPE.

## Revendications

1. Procédé de détection automatique des zones expertisables dans une image de pièce mécanique consistant à effectuer un marquage des zones de l'image et à déterminer le contour exact des zones en utilisant une méthode appelée ligne de partage des eaux, caractérisé en ce que pour effectuer le marquage des zones, il consiste :

- dans une première phase (1), à effectuer une segmentation manuelle d'au moins une image de référence pour détecter les zones de cette image de référence ;

- dans une deuxième phase (2), à définir et à appliquer au moins une transformation de simplification à l'image de référence, à déterminer et optimiser des intervalles de seuillage des zones de l'image de référence permettant d'obtenir des marqueurs caractéristiques de chaque zone, à fixer les intervalles de seuillage optimisés ;

- dans une troisième phase (3), à effectuer le marquage automatique des zones d'une nouvelle image en appliquant successivement à la nouvelle image la transformation de simplification et les intervalles de seuillages fixés pendant la deuxième phase.

2. Procédé selon la revendication 1, caractérisé en ce que chaque transformation de simplification appliquée aux images est choisie de manière à accentuer un contraste ou une différence entre au moins deux zones des images.

3. Procédé selon la revendication 2, caractérisé en ce que pour une image de référence donnée, les intervalles de seuillage des zones sont déterminés à partir des histogrammes de chaque zone et de manière à optimiser, pour chaque zone, des paramètres représentatifs de la qualité de séparation entre cette zone et chacune des autres zones de l'image de référence considérée.

4. Procédé selon la revendication 3, caractérisé en ce que les intervalles de seuillage des zones sont déterminés par approches successives en considérant les zones deux par deux.

5. Procédé selon la revendication 4, caractérisé en ce que pour une zone A donnée, le paramètre représentatif de la qualité de séparation entre cette zone A et une deuxième zone B est l'écart entre la probabilité pour qu'un point image de la zone A appartienne à l'intervalle de seuillage considéré et la probabilité pour qu'un point image de la zone B n'appartienne pas à l'intervalle de seuillage considéré.

6. Procédé selon la revendication 5, caractérisé en ce que pour une image de référence donnée, les intervalles de seuillage des différentes zones sont déterminés après utilisation de plusieurs transformations de simplification et en ce que pour chaque zone, le marqueur définitif de la zone considérée est déterminé par intersection de toutes les images seuillées correspondant à cette zone.

**Patentansprüche**

1. Verfahren zum automatischen Detektieren der auswertbaren Zonen in einem Bild eines mechanischen Teils, wobei das Verfahren darin besteht, daß eine Markierung der Zonen des Bilds durchgeführt und die exakte Kontur der Zonen unter Verwendung einer als "Wasserscheidenmethode" bezeichneten Methode bestimmt wird,
dadurch gekennzeichnet,
daß das Verfahren zur Markierung der Zonen darin besteht,

- in einer ersten Phase (1) eine manuelle Segmentierung wenigstens eines Referenzbildes durchzuführen, um die Zonen dieses Referenzbildes zu detektieren,
- in einer zweiten Phase (2) wenigstens eine Vereinfachungstransformation zu definieren und auf das Referenzbild anzuwenden, Schwellwertintervalle der Zonen des Referenzbildes zu bestimmen und zu optimieren, die es ermöglichen, charakteristische Marken für jede Zone zu gewinnen und die optimierten Schwellwertintervallen zu fixieren,
- in einer dritten Phase (3) die automatische Markierung der Zonen eines neuen Bildes durchzuführen, indem auf das neue Bild sukzessive die Vereinfachungstransformation und die während der zweiten Phase fixierten Schwellwertintervalle angewendet werden.

2. Verfahren nach Anspruch 1, dadurch gekennzeichnet, daß jede der auf die Bilder angewendeten Vereinfachungstransformationen so gewählt ist, daß ein Kontrast oder eine Differenz zwischen wenigstens zwei Zonen der Bilder hervorgehoben wird.

3. Verfahren nach Anspruch 2, dadurch gekennzeichnet, daß für ein gegebenes Referenzbild die Schwellwertintervalle der Zonen, ausgehend von den Histogrammen jeder Zone, in der Weise bestimmt werden, daß für jede Zone Parameter optimiert werden, die für die Qualität der Trennung zwischen dieser Zone und jeder anderen Zone des betrachteten Referenzbildes repräsentativ sind.

4. Verfahren nach Anspruch 3, dadurch gekennzeichnet, daß die Schwellwertintervalle der Zonen durch sukzessive Näherungen bestimmt werden, indem die Zonen paarweise betrachtet werden.

5. Verfahren nach Anspruch 4, dadurch gekennzeichnet, daß für eine gegebene Zone A der Parameter, der für die Qualität der Trennung zwischen dieser Zone A und einer zweiten Zone B repräsentativ ist, der Abstand ist zwischen der Wahrscheinlichkeit, daß ein Bildpunkt der Zone A dem betrachteten Schwellwertintervall angehört, und der Wahrscheinlichkeit, daß ein Bildpunkt der Zone B dem betrachteten Schwellwertintervall nicht angehört.

6. Verfahren nach Anspruch 5, dadurch gekennzeichnet, daß für ein gegebenes Referenzbild die Schwellwertintervalle der verschiedenen Zonen nach Anwendung mehrerer Vereinfachungstransformationen bestimmt werden und daß für jede Zone die definitive Marke der betrachteten Zone aus dem Durchschnitt aller Schwellwertbilder bestimmt wird, die dieser Zone entsprechen.

**Claims**

1. Process for automatic detection of the assessable areas within an image of a mechanical component consisting in performing a marking of the areas of the image and in determining the exact outline of the areas by using a so-called watershed line method, characterized in that, in order to perform the marking of the areas, it consists:

   - within a first phase (1), in performing manual segmentation of at least one reference image in order to detect the areas of this reference image;
   - within a second phase (2), in defining and in applying at least one simplifying transformation to the reference image, in determining and optimizing the thresholding intervals for the areas of the reference image making it possible to obtain markers characteristic of each area, in fixing the optimized thresholding intervals;
   - within a third phase (3), in performing the automatic marking of the areas of a new image by applying successively to the new image the simplifying transformation and the thresholding intervals fixed during the second phase.

2. Process according to Claim 1, characterized in that each simplifying transformation applied to the images is chosen so as to accentuate a contrast or a difference between at least two areas of the images.

3. Process according to Claim 2, characterized in that, for a given reference image, the thresholding intervals for the areas are determined from histograms of each area and in such a way as to optimize, for each area, parameters representative of the quality of separation between this area and each of the other areas of the relevant reference image.

4. Process according to Claim 3, characterized in that the thresholding intervals for the areas are determined by successive approximations, considering the areas in pairs.

5. Process according to Claim 4, characterized in that, for a given area A, the parameter representative of the quality of separation between this area A and a second area B is the disparity between the probability that an image point of area A belongs to the relevant thresholding interval and the probability that an image point of area B does not belong to the relevant thresholding interval.

6. Process according to Claim 5, characterized in that, for a given reference image, the thresholding intervals for the various areas are determined after using several simplifying transformations and in that for each area, the final marker for the relevant area is determined by intersecting all the thresheld images corresponding to this area.

FIG : 1a

FIG : 1b

FIG : 1c

FIG : 1d

FIG : 4a

FIG : 4b

FIG : 4c

Images de référence

↓    1

Segmentation manuelle    1

Détermination et optimisation des paramètres de marquage des zones    2

Marquage automatique des zones de nouvelles images et LPE    3

# FIG : 2

Base d'apprentissage

Image de référence — 10

Nombre de zones — 11

Marquage manuel des zones — 12

Détermination des contours des zones — 13

oui

Autre image de référence ? — 14

**FIG : 3a**

non

Fin de la première phase

Elaboration d'une base des transformations de simplification — 20

Transformation de simplification — 21

Image transformée — 22

Analyse du contenu des zones — 23

Détermination des intervalles de seuillage des zones — 24

oui — Autre transformation de simplification? — 25

Intersection des images seuillées correspondant à une même zone — 26

Marqueurs — 27

FIG : 3b

Fin de la deuxième phase

Histogramme de deux zones A et B

Initialisation des bornes de seuillage (x,y) de la zone A — 40

Incrémentation de (x,y) avec 255 > y > x

44

PA (x,y)
PB (x,y) — 41

$QA(x,y) = PA(x,y) - kPB(x,y)$ — 42

OUI

Autre intervalle de seuillage ? — 43

non

$QA = \sup [QA(x,y)]$ — 45

Intervalle de seuillage de la zone A — 46

FIG : 5